# EUROPÄISCHE PATENTSCHRIFT

(11) **EP 2 838 742 B1**
(45) Veröffentlichungstag und Bekanntmachung des Hinweises auf die Patenterteilung: **19.06.2019**
(21) Anmeldenummer: 13712713.0
(22) Anmeldetag: 15.03.2013
(51) Int. Cl.: B60D 1/06, B60D 1/62

(54) **ANHÄNGERKUPPLUNG**
TRAILER COUPLING
ATTELAGE DE REMORQUE

(30) Priorität: 16.04.2012 DE 102012206133
(43) Veröffentlichungstag der Anmeldung: 25.02.2015
(73) Patentinhaber: ZF Friedrichshafen AG, 88046 Friedrichshafen (DE)
(72) Erfinder: KLANK, Michael, 49084 Osnabrück (DE); STRATMANN, Julian, 49074 Osnabrück (DE); PYDDE, Lutz, 49577 Ankum (DE); VORTMEYER, Jens, 32361 Preussisch Oldendorf (DE); ELBERS, Christoph, 32351 Stemwede (DE)
(86) Internationale Anmeldenummer: PCT/EP2013/055315
(87) Internationale Veröffentlichungsnummer: WO 2013/156217

(56) Entgegenhaltungen:
- EP-A2- 2 366 563
- DE-A1-102010 033 641
- DE-U1-202011 005 144

## Beschreibung

Die Erfindung betrifft eine Anhängerkupplung mit einem Kugelträger, einer Kupplungskugel, die an einem freien Ende des Kugelträgers angeordnet ist, einer auf die Kupplungskugel aufgesetzten Kupplungskugelaufnahme, die auf der Kupplungskugel drehbar gelagert ist, einem an der Kupplungskugelaufnahme vorgesehenen Verschlussstück, mittels welchem die Kupplungskugelaufnahme gegen ein Abheben von der Kupplungskugel gesichert ist, und einer an der Kupplungskugel vorgesehene Sensoren umfassenden Winkelerfassungsvorrichtung, mittels welcher eine Verdrehung der Kupplungskugelaufnahme relativ zu der Kupplungskugel um eine Drehachse erfassbar ist.

Eine derartige Anhängerkupplung ist aus der EP 1 796 926 B1 bekannt, wobei die Winkelerfassungsvorrichtung einen Permanentmagneten und magnetfeldempfindliche Sensoren aufweist. Hierbei sind jedoch Komponenten der Winkelerfassungsvorrichtung sowohl an der Kupplungskugel als auch an der Kupplungskugelaufnahme vorgesehen. Beim Verwenden eines Anhängers mit einfacher Kupplungskugelaufnahme, in der keine Komponenten der Winkelerfassungsvorrichtung zusätzlich eingebaut sind, funktioniert daher die Knickwinkelmessung nicht.

In der DE 20 2011 005 144 U1 oder der DE 10 2010 033 641 A1 sind Anhängerkupplungen offenbart, bei denen in der Kupplungskugel eine Aussparung vorhanden ist, die einen Mitnehmerkörper drehbar gelagert aufnimmt. Bei auf der Kupplungskugel verspannter Zugkupplung, auch Kupplungskugelaufnahme genannt, dreht sich der Mitnehmerkörper bei Bewegungen der Zugkupplung um die Kupplungskugel mit. Eine in der Kupplungskugel angeordnete Sensorik kann aus der Drehung des Mitnehmerkörpers den Verdrehwinkel der Zugkupplung und damit den Knickwinkel des Anhängers gegenüber dem Zugfahrzeug bestimmen. Bei Verschleiß der Mitnehmerkörpers muss dieser ausgetauscht werden.

Ausgehend hiervon liegt der Erfindung die Aufgabe zugrunde, eine verschleißfreie Winkelerfassungsvorrichtung zur Knickwinkelmessung mit einer herkömmlichen Kupplungskugelaufnahme bereitzustellen.

Diese Aufgabe wird durch eine Anhängerkupplung nach Anspruch 1 gelöst. Bevorzugte Weiterbildungen der Anhängerkupplung sind in den Unteransprüchen und in der nachfolgenden Beschreibung gegeben.

Die Anhängerkupplung weist einen Kugelträger, eine Kupplungskugel, die an einem freien Ende des Kugelträgers angeordnet ist, eine auf die Kupplungskugel aufgesetzte Kupplungskugelaufnahme, die auf der Kupplungskugel drehbar gelagert ist, ein an der Kupplungskugelaufnahme vorgesehenes Verschlussstück, mittels welchem die Kupplungskugelaufnahme gegen ein Abheben von der Kupplungskugel gesichert ist, und eine an der Kupplungskugel vorgesehene Sensoren umfassende Winkelerfassungsvorrichtung auf, mittels welcher eine Verdrehung der Kupplungskugelaufnahme relativ zu der Kupplungskugel um eine Drehachse erfassbar ist, wobei mittels der Sensoren die Position des Verschlussstücks relativ zu der Kupplungskugel erfassbar ist.

Das Verschlussstück ist in Umfangsrichtung durch Seitenränder begrenzt, deren Lage relativ zu der Kupplungskugel mittels der Sensoren erfassbar ist. Die Umfangsrichtung bezieht sich auf die Drehachse. Somit verläuft die Umfangsrichtung um die Drehachse herum. Die Lage jedes Seitenrands relativ zu der Kupplungskugel ist eine Drehstellung. Es wird die Lage jedes Seitenrands relativ zu der Kupplungskugel durch einen Verdrehwinkel charakterisiert, um den der jeweilige Seitenrand relativ zu der Kupplungskugel um die Drehachse verdreht ist. Dieser Verdrehwinkel ist für jeden der Seitenränder mittels der Sensoren erfassbar. Aus den Verdrehwinkeln der Seitenränder ist der Verdrehwinkel des Verschlussstücks bestimmbar. Das Erfassen der Verdrehwinkel der Seitenränder entspricht dem Erfassen der Position des Verschlussstücks.

Erfindungsgemäß ist im Bereich der Seitenränder jeweils ein Freiraum vorgesehen, dessen Lage mittels der Sensoren erfassbar ist. Die Freiräume entstehen insbesondere dadurch, dass die Seitenränder in Umfangsrichtung nach außen hin abgerundet sind. Beispielsweise sind die Freiräume zwischen den Seitenrändern und der Kupplungskugel vorgesehen. Die Lage der Freiräume kann relativ einfach mittels der Sensoren erfasst werden. Die Lage jedes Freiraums relativ zu der Kupplungskugel ist insbesondere eine Drehstellung. Bevorzugt wird die Lage jedes Freiraums relativ zu der Kupplungskugel durch einen Verdrehwinkel charakterisiert, um den der jeweilige Freiraum relativ zu der Kupplungskugel um die Drehachse verdreht ist. Vorteilhaft ist dieser Verdrehwinkel für jeden der Freiräume mittels der Sensoren erfassbar. Aus den Verdrehwinkeln der Freiräume ist insbesondere der Verdrehwinkel des Verschlussstücks bestimmbar. Vorzugsweise entspricht das Erfassen der Verdrehwinkel der Freiräume dem Erfassen der Position des Verschlussstücks. Insbesondere entspricht das Erfassen der Verdrehwinkel der Freiräume dem Erfassen der Verdrehwinkel der Seitenränder.

Das Verschlussstück verhindert, dass sich die Kupplungskugelaufnahme von der Kupplungskugel lösen kann. In der Regel ist ein solches Verschlussstück bei standardmäßigen Kupplungskugelaufnahmen vorhanden, sodass diese für die Winkelerfassung verwendbar sind, ohne Änderungen vornehmen zu müssen. Aus der Information über die Position des Verschlussstücks kann die Verdrehung der Kupplungskugelaufnahme relativ zu der Kupplungskugel bestimmt werden. Insbesondere müssen an der Kupplungskugelaufnahme zur Winkelerfassung keine baulichen Änderungen vorgenommen werden, sodass auch eine mögliche Schwächung der Anhängerkupplung aufgrund solcher Änderungen vermeidbar ist. Die Drehachse verläuft insbesondere durch den Mittelpunkt der Kupplungskugel.

Mittels der Sensoren ist die Position des Verschlussstücks relativ zu der Kupplungskugel bevorzugt in einer senkrecht zur Drehachse verlaufenden Ebene erfassbar. Vorteilhaft verläuft diese Ebene durch den Mittelpunkt der Kupplungskugel. Die Position des Verschlussstücks relativ zu der Kupplungskugel ist insbesondere eine Drehstellung. Bevorzugt wird die Position des Verschlussstücks relativ zu der Kupplungskugel durch einen Winkel charakterisiert, um den das Verschlussstück relativ zu der Kupplungskugel um die Drehachse verdreht ist. Dieser Winkel kann auch als Drehwinkel oder Verdrehwinkel des Verschlussstücks bezeichnet werden. Insbesondere ist der Verdrehwinkel des Verschlussstücks mittels der Sensoren erfassbar. Vorzugsweise entspricht das Erfassen des Verdrehwinkels des Verschlussstücks dem Erfassen der Position des Verschlussstücks.

Es ist möglich, dass die Sensoren den Verdrehwinkel des Verschlussstücks lediglich relativ erfassen. Bevorzugt erfassen die Sensoren den Verdrehwinkel des Verschlussstücks aber absolut. Somit ist ein Offsetabgleich, beispielsweise in einer Rangierassistenzfunktion, nicht erforderlich. Unter Offsetabgleich ist die Feststellung einer bestehenden Abweichung zu verstehen, wobei die Abweichung z.B. durch Fertigungstoleranzen der zueinander in Bezug stehenden Bauteile hervorgerufen sein kann. Bevorzugt wird der Verdrehwinkel ausgehend von einer Referenzlage des Verschlussstücks (Nullmarke) bestimmt, der vorteilhaft ein Wert von 0°zugeordnet wird. Die Erfassung der Position des Verschlussstücks kann z.B. induktiv, kapazitiv und/oder resistiv (insbesondere durch Anwendung piezoresistiver Sensoren) durchgeführt werden.

Die vorgenannten Seitenränder und/oder Freiräume sind in der Regel bei standardmäßigen Kupplungskugelaufnahmen vorhanden, sodass an diesen für die Winkelmessung keine besonderen Maßnahmen ergriffen werden müssen.

Vorteilhaft bildet die Kupplungskugelaufnahme zusammen mit dem Verschlussstück eine die Kupplungskugel umschließende Kugelpfanne. Bevorzugt liegt die Kugelpfanne, insbesondere mit Ausnahme der Freiräume, in Umfangsrichtung und/oder umlaufend an der Kupplungskugel an. Die Kugelpfanne weist insbesondere eine hohlkugelförmige Lagerfläche auf, die an der kugelförmigen Außenfläche der Kupplungskugel anliegt. Bevorzugt ist ein Teil der hohlkugelförmigen Lagerfläche an der Kupplungskugelaufnahme vorgesehen, wobei ein anderer Teil der hohlkugelförmigen Lagerfläche an dem Verschlussstück vorgesehen ist. Vorteilhaft weist die Kupplungskugelaufnahme eine Ausnehmung auf, in welcher der eine Teil der hohlkugelförmigen Lagerfläche vorgesehen ist. Bevorzugt ist das Verschlussstück in der Ausnehmung oder an deren Rand angeordnet.

Da im Bereich der Freiräume weder die Kupplungskugelaufnahme noch das Verschlussstück an der Kupplungskugel anliegt, ist die Lage der Freiräume mittels der Sensoren durch Abstandsmessungen erfassbar. Insbesondere ergibt sich eine deutliche Signaländerung zwischen den Freiräumen (großer Abstand) und den Bereichen, an denen die Kugelpfanne an der Kupplungskugel anliegt (kleiner Abstand). Die Sensoren sind in diesem Fall insbesondere Abstandssensoren.

Bevorzugt ist das Verschlussstück gegen die Kupplungskugel gespannt, insbesondere mittels eines Spannelements. Die Kugelpfanne übt somit außerhalb der Freiräume Druck auf die Kupplungskugel aus. Daher ist die Lage der Freiräume mittels der Sensoren durch Druck- oder Kraftmessungen erfassbar. Insbesondere ergibt sich eine deutliche Signaländerung zwischen den Freiräumen (geringer Druck) und den Bereichen, an denen die Kugelpfanne an der Kupplungskugel anliegt (hoher Druck). Die Sensoren sind in diesem Fall insbesondere Druck- oder Kraftsensoren. Das Spannelement bildet oder umfasst z.B. eine Feder.

Durch die Erfassung der Lage beider Seitenränder und/oder beider Freiräume ist insbesondere die Position und/oder der Verdrehwinkel des Verschlussstücks absolut erfassbar. Bevorzugt sind die Abmessungen des Verschlussstücks in Umfangsrichtung bekannt. Insbesondere sind die Abmessungen des Verschlussstücks in Umfangsrichtung kleiner als der halbe Außendurchmesser der Kupplungskugel und/oder kleiner als der halbe Innendurchmesser der Kugelpfanne. In diesem Fall kann die Position und/oder der Verdrehwinkel des Verschlussstücks automatisch erkannt werden, insbesondere auch ohne Informationen über die Abmessungen des Verschlussstücks in Umfangsrichtung.

Gemäß einer Weiterbildung sind die Sensoren der Winkelerfassungsvorrichtung als Abstandssensoren und/oder als Drucksensoren ausgebildet. Die Sensoren sind insbesondere an der Kupplungskugel angeordnet. Bevorzugt sind die Sensoren auf einem Bogen um die Drehachse angeordnet. Vorteilhaft ist dieser Bogen ein Kreisbogen. Vorzugsweise sind die Sensoren nebeneinander und/oder im Abstand zueinander angeordnet. Beispielsweise sind die Sensoren rings der Drehachse an der Kupplungskugel angeordnet. Mittels der Sensoren ist insbesondere die Position des Verschlussstücks und/oder die Lage der Seitenränder und/oder oder die Lage der Freiräume erfassbar. Vorteilhaft ist jedem der Sensoren ein Messwinkel zugeordnet. Vorzugsweise sind dabei unterschiedlichen Sensoren auch unterschiedliche Messwinkel zugeordnet. Erfasst einer der Sensoren einen der Seitenränder oder einen der Freiräume, so entspricht die Lage des erfassten Seitenrands oder Freiraums insbesondere dem Messwinkel dieses Sensors. Die Auflösung der Winkelerfassungsvorrichtung ist somit durch die Anzahl der Sensoren bestimmbar. Die Anzahl der Sensoren beträgt beispielsweise zwanzig.

Bevorzugt sind die Sensoren in die Kupplungskugel eingelassen. Somit ist es nicht nur in sensorischer, sondern auch in mechanischer Hinsicht möglich, standardmäßige Kupplungskugelaufnahmen zu verwenden. Beispielsweise ist in die Kupplungskugel eine um die Drehachse umlaufende Nut eingebracht, in der die Sensoren angeordnet sind. Ferner können rings der Drehachse mehrere Ausnehmungen in die Kupplungskugel eingebracht sein, in denen die Sensoren angeordnet sind.

Die Kupplungsaufnahme und/oder das Verschlussstück bestehen bevorzugt aus Metall, insbesondere aus Stahl. Die Kupplungskugelaufnahme und/oder das Verschlussstück bestehen bevorzugt aus einem elektrisch leitenden Material. Daher ist es möglich, die Freiräume durch kapazitive Messungen zu erfassen. Hierfür können mehrere kapazitive Sensoren vorgesehen sein, die beispielsweise folgendermaßen aufgebaut sind. Jeder der kapazitiven Sensoren umfasst zwei an der Kupplungskugel angeordnete Elektroden, die einen Abstand zueinander aufweisen und sich bevorzugt in radialer Richtung erstrecken. Die Kugelpfanne bildet eine dritte Elektrode, die den von den beiden anderen Elektroden aufgespannten Raum in radialer Richtung begrenzt. Im Bereich der Freiräume fehlt aber die dritte Elektrode, was eine Kapazitätsänderung zwischen den beiden anderen Elektroden hervorruft. Diese Kapazitätsänderung ist messbar und somit die Lage des Freiraums erfassbar. Die Sensoren können daher durch kapazitive Abstandssensoren gebildet sein.

Bevorzugt bestehen die Kupplungskugelaufnahme und/oder das Verschlussstück aus Magnetwerkstoff, insbesondere aus einem ferromagnetischen Material. Somit können z.B. elektrische Spulen als Sensoren eingesetzt werden, um die Lage der Freiräume zu erfassen. Die Kugelpfanne beeinflusst den Scheinwiderstand, insbesondere die Induktivität der Sensoren. Im Bereich der Freiräume fehlt aber diese Beeinflussung, was eine Änderung des Scheinwiderstands, insbesondere der Induktivität, zur Folge hat. Diese Änderung des Scheinwiderstandes, insbesondere der Induktivität, ist messbar und somit die Lage des Freiraums erfassbar. Vorzugsweise sind die Sensoren durch induktive Abstandssensoren gebildet.

Das Verschlussstück ist insbesondere an der Kupplungskugelaufnahme gelagert, vorzugsweise bewegbar. Vorteilhaft ist das Verschlussstück an die Kupplungskugel angelegt oder anlegbar, insbesondere mittels eines Betätigungselements. Bevorzugt umfasst die Kupplungskugelaufnahme das Betätigungselement, welches beispielsweise als Hebel ausgebildet ist. Vorteilhaft ist das Verschlussstück in seiner an die Kupplungskugel angelegten Stellung fixiert oder fixierbar, insbesondere mittels einer Verschlussmechanik und/oder mittels des Betätigungselements und/oder mittels des Betätigungselements unter Zwischenschaltung der Verschlussmechanik. Beispielsweise ist die Verschlussmechanik mittels des Betätigungselements betätigbar. Ferner kann das Betätigungselement einen Teil der Verschlussmechanik bilden. Das Verschlussstück ist insbesondere von der Kupplungskugel abrückbar, vorzugsweise mittels des Betätigungselements und/oder der Verschlussmechanik. Somit ist es möglich, die Kupplungskugelaufnahme von der Kupplungskugel zu lösen, insbesondere abzuheben. Gemäß einer Weiterbildung umfasst die Kupplungskugelaufnahme das Spannelement, mittels welchem das Verschlussstück gegen die Kupplungskugel gespannt oder spannbar ist. Das Spannelement kann einen Teil der Verschlussmechanik bilden.

Die Kupplungskugel ist insbesondere fest, vorzugsweise starr, mit dem Kugelträger verbunden. Beispielsweise sind der Kugelträger und die Kupplungskugel einstückig, vorzugsweise materialhomogen, miteinander ausgebildet. Somit kann ein Heckträger, wie z.B. ein Fahrradträger, an der Kupplungskugel montiert werden. Auch ist der Einsatz eines Anhängers mit Schlingerdämpfung möglich. Der Durchmesser der Kupplungskugel beträgt vorzugsweise 50 mm.

Der Kugelträger ist bevorzugt an einem Zugfahrzeug vorgesehen, welches insbesondere einen Kraftwagen bildet. Beispielsweise ist der Kugelträger fest, insbesondere starr, mit einem Fahrzeugaufbau und/oder einem Fahrgestell und/oder einem Querträger des Zugfahrzeugs verbunden. Die Drehachse verläuft bevorzugt parallel zu einer Hochachse des Zugfahrzeugs. Vorzugsweise schneidet die Drehachse eine Mittellängsachse des Zugfahrzeugs. Die Kupplungskugelaufnahme ist bevorzugt an einem Anhängerfahrzeug vorgesehen. Insbesondere ist die Kupplungskugelaufnahme an einem vorderen Ende einer Deichsel des Anhängerfahrzeugs angeordnet.

Das Zugfahrzeug und das Anhängerfahrzeug sind durch die Anhängerkupplung miteinander verbunden und bilden ein Gespann. Der zwischen der Längsachse des Zugfahrzeugs und einer Längsachse des Anhängerfahrzeugs eingeschlossene Winkel wird auch als Knickwinkel bezeichnet. Insbesondere liegt der Knickwinkel dabei in einer senkrecht zur Hochachse des Zugfahrzeugs verlaufenden Ebene. Die Position des Verschlussstücks, insbesondere dessen Verdrehwinkel, ist oder repräsentiert vorzugsweise den Knickwinkel. Die Referenzlage ist insbesondere durch die Lage der Längsachse des Zugfahrzeugs gegeben, mit welcher die Längsachse des Anhängerfahrzeugs im nicht ausgelenkten Zustand des Anhängers fluchtet und einen Knickwinkel von 0°einschließt.

Gemäß einer Weiterbildung ist mit den Sensoren eine Auswerteeinrichtung verbunden, mittels welcher die Position, insbesondere der Verdrehwinkel, des Verschlussstücks und/oder der Knickwinkel bestimmbar ist, insbesondere aus den Verdrehwinkeln der Seitenränder und/oder Freiräume. Die Winkelerfassungsvorrichtung kann die Auswerteeinrichtung umfassen. Alternativ kann die Auswerteeinrichtung auch separat von der Winkelerfassungsvorrichtung vorgesehen sein.

Die Erfindung wird nachfolgend anhand einer bevorzugten Ausführungsform unter Bezugnahme auf die Zeichnung beschrieben. In der Zeichnung zeigen:
Fig. 1 eine schematische Seitenansicht einer Anhängerkupplung gemäß einer Ausführungsform der Erfindung,
Fig. 2 eine Unteransicht der aus Fig. 1 ersichtlichen Kupplungskugelaufnahme ohne Kupplungskugel,
Fig. 3 eine Seitenansicht der Kupplungskugel ohne Kupplungskugelaufnahme und ohne Sensoren und
Fig. 4 eine schematische Schnittansicht der Anhängerkupplung entlang der aus Fig. 1 ersichtlichen Schnittlinie A-A.

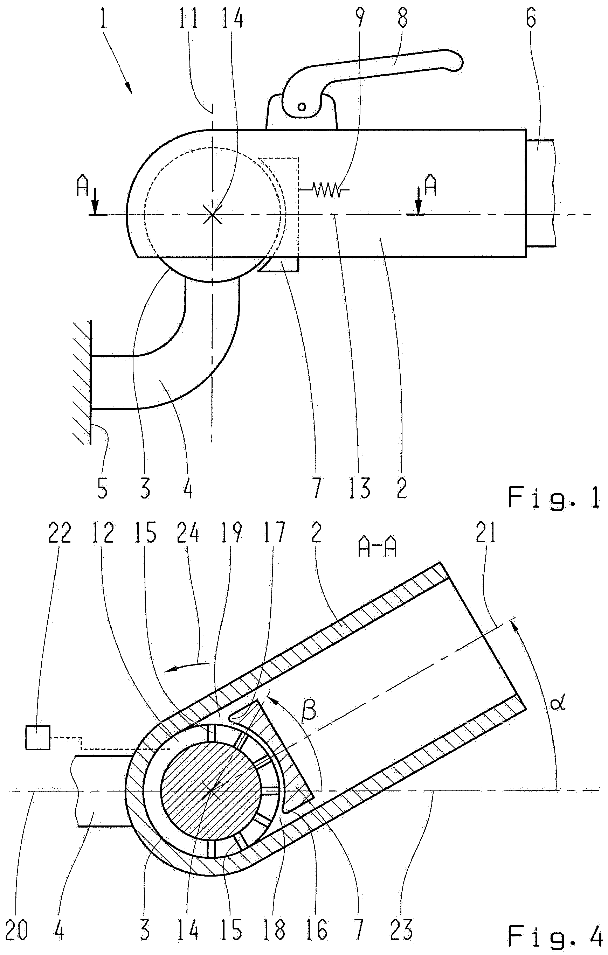

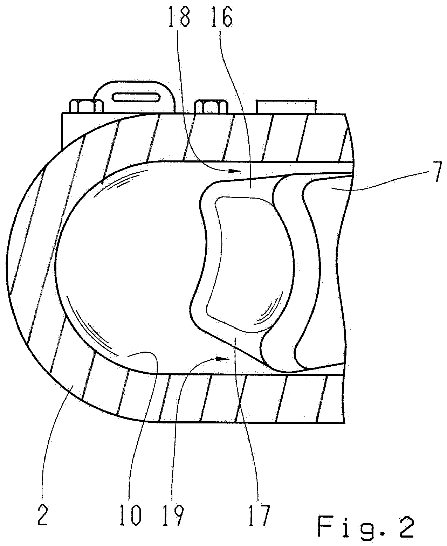

Aus den Fig. 1 bis 4 sind unterschiedliche Darstellungen und Teildarstellungen einer Anhängerkupplung 1 gemäß einer Ausführungsform ersichtlich, wobei eine Kupplungskugelaufnahme 2 auf eine Kupplungskugel 3 eines gekrümmten Kugelträgers 4 aufgesetzt ist. Die nach oben weisende Kupplungskugel 3 ist an einem freien Ende des Kugelträgers 4 vorgesehen und insbesondere einstückig mit diesem ausgebildet. Ferner ist der Kugelträger 4 starr mit einem hinteren Querträger 5 eines Zugfahrzeugs verbunden, und die Kupplungskugelaufnahme 2 ist fest mit einem vorderen Ende einer Deichsel 6 eines Anhängerfahrzeugs verbunden. Damit die Kupplungskugelaufnahme 2 nicht unbeabsichtigt von der Kupplungskugel 3 abgehoben werden kann, umfasst die Kupplungskugelaufnahme ein Verschlussstück 7, welches durch Betätigen eines Hebels 8 mit der Kupplungskugel 3 zur Anlage gebracht werden kann. Das Verschlussstück 7 sichert die Kupplungskugelaufnahme 2 formschlüssig an der Kupplungskugel 3 und ist zusätzlich gegen diese mittels einer schematisch angedeuteten Feder 9 gespannt. Die Kupplungskugelaufnahme 2 und das Verschlussstück 7 bilden zusammen eine die Kupplungskugel 3 umschließende Kugelpfanne 10 (siehe Fig. 2), welche auf der Kupplungskugel 3 drehbar gelagert ist.

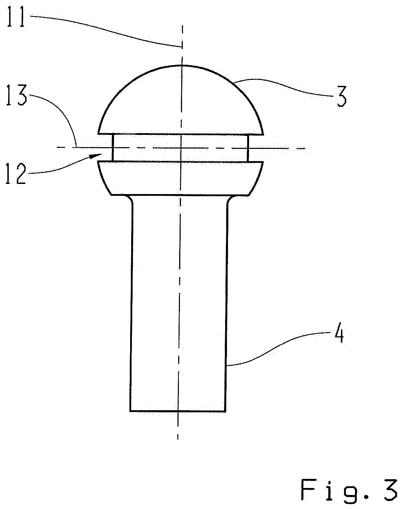

In die Kupplungskugel 3 ist eine um eine Drehachse 11 umlaufende Ringnut 12 eingebracht, die in einer senkrecht zur Drehachse 11 ausgerichteten Ebene 13 verläuft, in welcher vorzugsweise der Mittelpunkt 14 der Kupplungskugel 3 liegt. Die auch als Hochachse bezeichnete Drehachse 11 verläuft insbesondere parallel zu einer Hochachse des Zugfahrzeugs. Bevorzugt schneidet die Drehachse 11 auch eine Mittellängsachse 20 des Zugfahrzeugs. In der Ringnut 12 sind rings der Drehachse 11 mehrere induktive Abstandssensoren 15 angeordnet, von denen einige schematisch in Fig. 4 dargestellt sind. Fig. 3 zeigt die Kupplungskugel 3 hingegen vor der Montage der Sensoren 15. Die sich radial von der Drehachse 11 weg erstreckende Messrichtung jedes Sensors 15 schließt mit der Mittellängsachse 20 einen definierten Messwinkel ein, der für jeden Sensor 15 unterschiedlich ist. Für einen der Sensoren 15 ist der Messwinkel in Fig. 4 dargestellt und mit dem Bezugszeichen β gekennzeichnet.

In einer auf die Drehachse 11 bezogenen Umfangsrichtung 24 ist das Verschlussstück 7 durch Seitenränder 16 und 17 begrenzt, die jeweils nach außen abgerundet sind. Dadurch ergeben sich im Bereich der Seitenränder 16 und 17 Freiräume 18 und 19, die mittels der Sensoren 15 erfasst werden können. Da die Messwinkel der Sensoren 15 bekannt sind, ist durch Ermitteln derjenigen Sensoren, welche die Freiräume erfassen, auch die Lage der Freiräume bekannt. Die Lage jedes Freiraums wird dabei insbesondere in Form eines Verdrehwinkels angegeben, der bevorzugt dem jeweiligen Messwinkel entspricht. Wird ein und derselbe Freiraum von mehreren, beispielsweise von zwei benachbarten, der Sensoren erfasst, ist zur Ermittlung des Verdrehwinkels auch eine mathematische Approximation möglich.

Ist die Lage der Freiräume 18 und 19 bekannt, kann der Knickwinkel a, der zwischen der Längsachse 20 des Zugfahrzeugs und einer Längsachse 21 des Anhängerfahrzeugs eingeschlossen wird, mittels einer mit den Sensoren 15 elektrisch verbundenen Auswerteeinrichtung 22 bestimmt werden, die beispielsweise am oder im Zugfahrzeug oder am Kugelträger 4 vorgesehen ist. Die gestrichelte Linie 23 kennzeichnet eine Referenzlage, von der aus der Knickwinkel α bestimmt wird. Insbesondere fällt die Linie 23 mit der Längsachse 20 zusammen und kennzeichnet somit den nicht ausgelenkten Zustand des Anhängerfahrzeugs, d.h. α = 0°. Der Winkel α repräsentiert auch die Position und/oder den Verdrehwinkel des Verschlussstücks 7. Insbesondere ergibt sich der Winkel α aus dem arithmetischen Mittel derjenigen Verdrehwinkel, die für die Freiräume 18 und 19 ermittelt worden sind. Ist der für den Freiraum 18 erfasste Verdrehwinkel β1 und der für den Freiraum 19 erfasste Verdrehwinkel β2, so ergibt sich der Winkel α beispielsweise zu: α = (β1 + β2) / 2.

### Bezugszeichen

- 1: Anhängerkupplung
- 2: Kupplungskugelaufnahme
- 3: Kupplungskugel
- 4: Kugelträger
- 5: hinterer Querträger des Zugfahrzeugs
- 6: Deichsel des Anhängerfahrzeugs
- 7: Verschlussstück
- 8: Hebel
- 9: Feder
- 10: Kugelpfanne
- 11: Drehachse
- 12: Ringnut -
- 13: Ebene
- 14: Mittelpunkt der Kupplungskugel
- 15: Sensor
- 16: Seitenrand des Verschlussstücks
- 17: Seitenrand des Verschlussstücks
- 18: Freiraum
- 19: Freiraum
- 20: Längsachse des Zugfahrzeugs
- 21: Längsachse des Anhängerfahrzeugs
- 22: Auswerteeinrichtung
- 23: Linie
- 24: Umfangsrichtung
- α: Knickwinkel / Position des Verschlussstücks
- β: Messwinkel

## Patentansprüche

1. Anhängerkupplung mit einem Kugelträger (4), einer Kupplungskugel (3), die an einem freien Ende des Kugelträgers (4) angeordnet ist, einer auf die Kupplungskugel (3) aufgesetzten Kupplungskugelaufnahme (2), die auf der Kupplungskugel (3) drehbar gelagert ist, einem an der Kupplungskugelaufnahme (2) vorgesehenen Verschlussstück (7), mittels welchem die Kupplungskugelaufnahme (2) gegen ein Abheben von der Kupplungskugel (3) gesichert ist, und einer an der Kupplungskugel (3) vorgesehene Sensoren (15) umfassenden Winkelerfassungsvorrichtung, mittels welcher eine Verdrehung der Kupplungskugelaufnahme (2) relativ zu der Kupplungskugel (3) um eine Drehachse (11) erfassbar ist,
**dadurch gekennzeichnet, dass**
das Verschlussstück (7) in einer auf die Drehachse (11) bezogenen Umfangsrichtung (24) durch Seitenränder (16, 17) begrenzt ist, wobei im Bereich der Seitenränder (16, 17) jeweils ein Freiraum (18, 19) vorgesehen ist, dessen Lage mittels der Sensoren (15) erfassbar ist, und somit die Position des Verschlussstücks relativ zu der Kupplungskugel (3) erfassbar ist.

2. Anhängerkupplung nach Anspruch 1, **dadurch gekennzeichnet, dass** mittels der Sensoren (15) die Position des Verschlussstücks (7) relativ zu der Kupplungskugel (3) in einer senkrecht zur Drehachse (11) verlaufenden Ebene (13) erfassbar ist.

3. Anhängerkupplung nach Anspruch 2, **dadurch gekennzeichnet, dass** die Kupplungskugelaufnahme (2) zusammen mit dem Verschlussstück (7) eine die Kupplungskugel (3) umschließende Kugelpfanne (10) bildet, die mit Ausnahme von den Freiräumen (18, 19) in Umfangsrichtung (24) an der Kupplungskugel (3) anliegt.

4. Anhängerkupplung nach einem der vorangehenden Ansprüche, **dadurch gekennzeichnet, dass** die Sensoren (15) als Abstands- oder Drucksensoren ausgebildet und auf einem Bogen um die Drehachse (11) an der Kupplungskugel (3) angeordnet sind.

5. Anhängerkupplung nach Anspruch 4, **dadurch gekennzeichnet, dass** die Sensoren (15) durch induktive Abstandssensoren gebildet sind.

6. Anhängerkupplung nach einem der vorangehenden Ansprüche, **dadurch gekennzeichnet, dass** die Sensoren (15) in die Kupplungskugel (3) eingelassen sind.

7. Anhängerkupplung nach einem der vorangehenden Ansprüche, **dadurch gekennzeichnet, dass** das an der Kupplungskugelaufnahme (2) gelagerte und an die Kupplungskugel (3) angelegte Verschlussstück (7) von der Kupplungskugel (3) abrückbar ist.

8. Anhängerkupplung nach einem der vorangehenden Ansprüche, **dadurch gekennzeichnet, dass** der Kugelträger (4) an einem Zugfahrzeug und die Kupplungskugelaufnahme (2) an einem Anhängerfahrzeug vorgesehen ist.

## Claims

1. Trailer coupling having a ball support (4), a coupling ball (3) which is arranged at a free end of the ball support (4), a coupling ball receptacle (2) which is placed onto the coupling ball (3) and is mounted rotatably on the coupling ball (3), a closure piece (7) which is provided on the coupling ball receptacle (2) and by means of which the coupling ball receptacle (2) is secured against lifting up from the coupling ball (3), and an angle detection apparatus which comprises sensors (15) which are provided on the coupling ball (3), by means of which angle detection apparatus a rotation of the coupling ball receptacle (2) relative to the coupling ball (3) about a rotational axis (11) can be detected, **characterized in that** the closure piece (7) is delimited by way of side edges (16, 17) in a circumferential direction (24) in relation to the rotational axis (11), in each case one clearance (18, 19) being provided in the region of the side edges (16, 17), the position of which clearance (18, 19) can be detected by means of the sensors (15), and it therefore being possible for the position of the closure piece relative to the coupling ball (3) to be detected.

2. Trailer coupling according to Claim 1, **characterized in that** the position of the closure piece (7) relative to the coupling ball (3) in a plane (13) which runs perpendicularly with respect to the rotational axis (11) can be detected by means of the sensors (15).

3. Trailer coupling according to Claim 2, **characterized in that**, together with the closure piece (7), the coupling ball receptacle (2) forms a ball socket (10) which encloses the coupling ball (3) and bears against the coupling ball (3) in the circumferential direction (24) with the exception of the clearances (18, 19).

4. Trailer coupling according to one of the preceding claims, **characterized in that** the sensors (15) are configured as distance or pressure sensors and are arranged on the coupling ball (3) on an arc around the rotational axis (11).

5. Trailer coupling according to Claim 4, **characterized in that** the sensors (15) are formed by way of inductive distance sensors.

6. Trailer coupling according to one of the preceding claims, **characterized in that** the sensors (15) are embedded in the coupling ball (3).

7. Trailer coupling according to one of the preceding claims, **characterized in that** the closure piece (7) which is mounted on the coupling ball receptacle (2) and is placed onto the coupling ball (3) can be moved away from the coupling ball (3).

8. Trailer coupling according to one of the preceding claims, **characterized in that** the ball support (4) is provided on a tractor vehicle and the coupling ball receptacle (2) is provided on a trailer vehicle.

## Revendications

1. Attelage de remorque avec un support de boule (4), une boule d'attelage (3), qui est disposée sur une extrémité libre du support de boule (4), un logement de boule d'attelage (2) posé sur la boule d'attelage (3), qui est appuyé de façon rotative sur la boule d'attelage (3), une pièce de verrouillage (7) prévue sur le logement de boule d'attelage (2), au moyen de laquelle le logement de boule d'attelage (2) peut être bloqué contre un soulèvement à partir de la boule d'attelage (3), et un dispositif de détection d'angle comprenant des capteurs (15) prévus sur la boule d'attelage (3), au moyen duquel une rotation du logement de boule d'attelage (2) par rapport à la boule d'attelage (3) autour d'un axe de rotation (11) peut être détecté, **caractérisé en ce que** la pièce de verrouillage (7) est limitée par des bords latéraux (16, 17) dans une direction périphérique (24) rapportée à l'axe de rotation (11), dans lequel il est prévu dans la région des bords latéraux (16, 17) chaque fois un espace libre (18, 19), dont la position peut être détectée au moyen des capteurs (15), et la position de la pièce de verrouillage par rapport à la boule d'attelage (3) peut ainsi être détectée.

2. Attelage de remorque selon la revendication 1, **caractérisé en ce que** la position de la pièce de verrouillage (7) par rapport à la boule d'attelage (3) dans un plan (13) s'étendant perpendiculairement à l'axe de rotation (11) peut être détectée au moyen des capteurs (15).

3. Attelage de remorque selon la revendication 2, **caractérisé en ce que** le logement de boule d'attelage (2) avec la pièce de verrouillage (7) forme une coquille sphérique (10) entourant la boule d'attelage (3), qui s'applique dans la direction périphérique (24) sur la boule d'attelage (3) à l'exception des espaces libres (18, 19).

4. Attelage de remorque selon l'une quelconque des revendications précédentes, **caractérisé en ce que** les capteurs (15) sont formés par des capteurs de distance ou des capteurs de pression et sont disposés sur la boule d'attelage (3) selon un arc autour de l'axe de rotation (11).

5. Attelage de remorque selon la revendication 4, **caractérisé en ce que** les capteurs (15) sont formés par des capteurs de distance à induction.

6. Attelage de remorque selon l'une quelconque des revendications précédentes, **caractérisé en ce que** les capteurs (15) sont incrustés dans la boule d'attelage (3).

7. Attelage de remorque selon l'une quelconque des revendications précédentes, **caractérisé en ce que** la pièce de verrouillage (7) montée sur le logement de boule d'attelage (2) et appliquée à la boule d'attelage (3) peut être retirée de la boule d'attelage (3).

8. Attelage de remorque selon l'une quelconque des revendications précédentes, **caractérisé en ce que** le support de boule (4) est prévu sur un véhicule tracteur et le logement de boule d'attelage (2) est prévu sur un véhicule remorque.
